# EUROPEAN PATENT APPLICATION

(11) **EP 1 903 838 A1**
(43) Date of publication of application: **26.03.2008**
(21) Application number: 06767502.5
(22) Date of filing: 28.06.2006
(51) Int. Cl.: H05B 41/42, H05B 41/24, H05B 41/392

(54) **ELECTRODELESS DISCHARGE LAMP ILLUMINATOR**

(30) Priority: 14.07.2005 JP 2005205120
(71) Applicant: Patent-Treuhand-Gesellschaft für elektrische Glühlampen mbH, 81543 München (DE)
(72) Inventor: KONAKA, Daijiro, Tobu Yokohama Bldg. No.3 (4F), Yokohama-shi, Kanagawa 220-0004 (JP)
(74) Representative: Raiser, Franz
(86) International application number: PCT/JP2006/312885
(87) International publication number: WO 2007/007554

(57) **Abstract**

The present invention is aimed at providing an electrodeless discharge lamp lighting fixture which can secure lightness even in the case of a dimmering control at a low temperature.The electrodeless discharge lamp lighting fixtureaccording to the present invention comprises an electrodelessdischarge lamp 1, a dimmering inverter 3 which is connected to an AC power supply 11 and applies a high-frequency voltage to the electrodeless discharge lamp 1, a controlling relay 5adapted to receive an AC dimmering signal to turns ON/OFF, anda control substrate 4 which converts, into DC, the AC dimmeringsignal received from said controlling relay 5 and applies the DC dimmering signal to the dimmering inverter 3, wherein, in case the control relay 5 is ON, the control substrate 4 outputs a DC dimmering signal of 4 volts or greater, and the dimmeringinverter 3 assumes an operation mode of about 50%.

## Description

### Technical Field

The present invention relates to an electrodeless discharge lamp lighting fixture and, more particularly, to an electrodeless discharge lamp lighting fixture which can secure the brightness at the time of 50% dimmer light at a low temperature.

### Background Technique

There has so far been known an electrodeless discharge lamp constituted in such a manner that a high-frequency electromagnetic field is applied to a discharge gas enclosed in a glass pipe, whereby the discharge gas is excited to emit light. This type of lamp has features such as small in size, high output, long useful life time, etc.

In case of such an electrodeless discharge lamp uses amalgam is used in a state accommodated in, e.g. an exhaust pipe, so that there was a problem to be solved in the respect of the lightness thereof at a low temperature, but it is known (See, for example, Patent Literature 1) that, as shown in Figs. 6 and 7, an amalgam 9 is accommodated in an exhaust pipe 8 of a light-emitting tube 6 of an electrodeless discharge lamp1 accommodated in a lighting fixture 2, and, by providing a cover 10 over this exhaust pipe 8, the total luminous flux is raised at the low temperature, and thus, the brightness is enhanced (See, for example, Patent Literature 1 cited herein).
Patent Literature 1: Patent Application Disclosure No.2003-303575.

### Disclosure of the Invention

### Problem to be Solved by the Invention

In the case of the prior electrodeless discharge lamp, it is not practiced to use an electrodeless discharge lamp by performing the light-dimming control of an electrodeless discharge lamp. In particular, reference to the light-dimming control of an electrodeless discharge lamp at a low temperature is not found.

It is the object of the present invention to provide an electrodeless discharge lamp illuminating device which can secure brightness even when light-dimming control is performed at a low temperature.

### Means for Solving the Problem

The electrodeless discharge lamp illuminating device according to the present invention comprises an electrodeless discharge lamp, a dimming inverter connected to an AC power source and applies a high-frequency voltage to the electrodeless discharge lamp, a control relay adapted to receive an AC dimming signal and performs ON/OFF, and a control substrate which converts an AC light-dimming signal from said control relay into DC and thus adds a DC dimming signal to the dimming inverter; and, in case the control relay is turned on, the control substrate outputs a DC dimming signal higher than 4 volts, and the dimming inverter enters into an operation mode of about 50%.

### Effect of the invention

The electrodeless discharge lamp lighting fixture according to the present invention can secure brightness even at the time of dimmering control at a low temperature, due to the above-mentioned constitution.

### Brief description of the drawings

[Fig. 1] shows Embodiment 1 of the present invention, or more concretely, shows the electrodeless discharge lamp lighting fixture with said electrodeless discharge lamp, etc. accommodated therein.
[Fig. 2] shows Embodiment 1 of the present invention in the form of a block diagram showing the constitution of the lighting fixture for the electrodeless discharge lamp.
[Fig. 3] shows Embodiment 1 of the present invention, wherein the contents of the dimmer control are shown.
[Fig. 4] is a schematic diagram showing Embodiment 1 of the present invention, wherein the relationship between the relative brightness value of the electrodeless discharge lamp and the dimmer voltage at a temperature of -10° C around the instrument.
[Fig. 5] is a schematic diagram of Embodiment 1 of the present invention, wherein the relationship between the relative value of the brightness when the dimmer voltage of the electrodeless discharge lamp is used as a parameter and the temperature around the instrument.

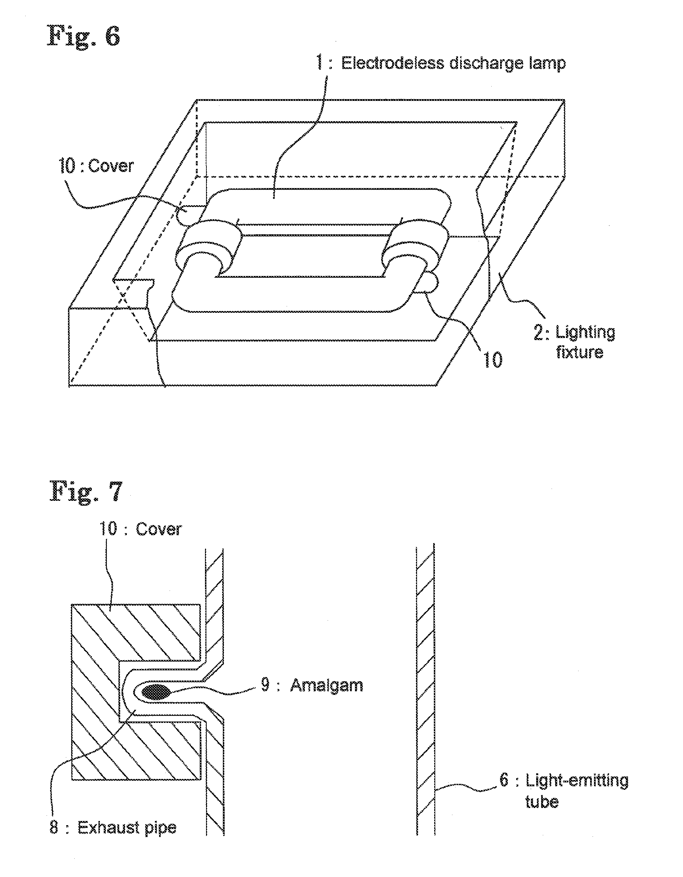

[Fig. 6] is a perspective view of the lighting fixture using a conventional electrodeless discharge lamp.
[Fig. 7] is an enlarged view of the essential portion of the conventional electrodeless discharge lamp.

### Explanation of reference numerals and symbols

1: Electrodeless discharge lamp, 2: Lighting fixture, 3: Dimming inverter, 4: Control substrate, 5: Control relay, 5a: Coil, 5b: Contact, 8: Exhaust pipe, 9: Amalgam, 10: Cover, 11: AC power supply;

### Best configuration for executing the invention

### Embodiment 1.

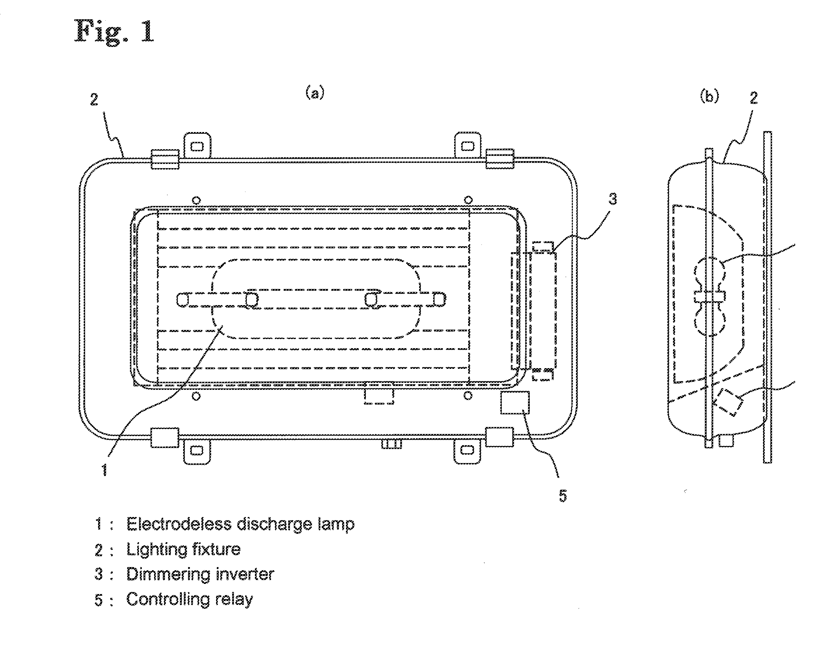

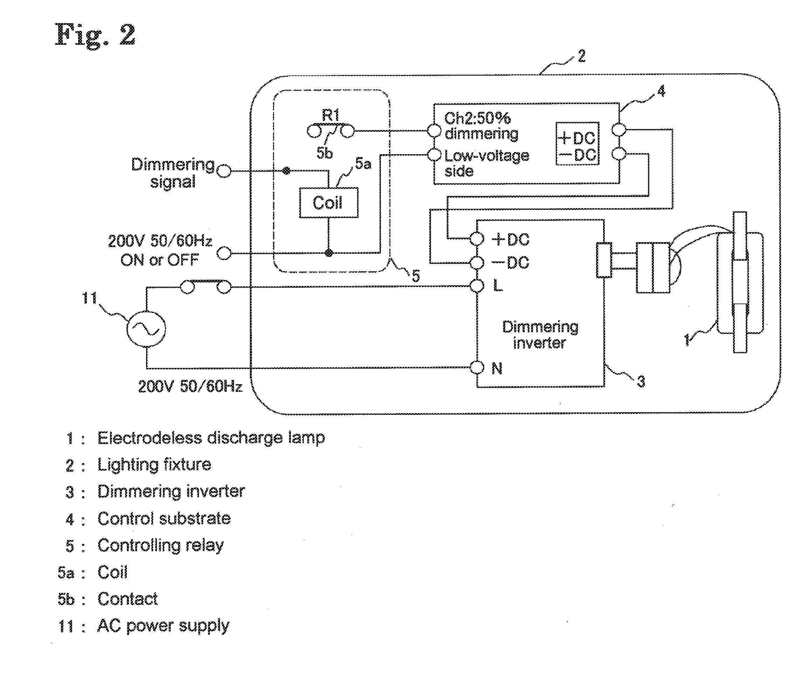

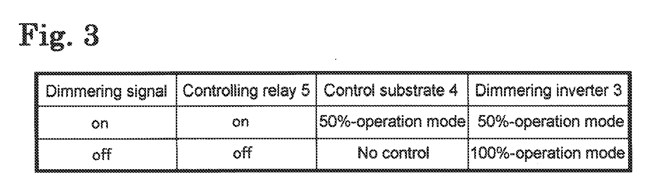

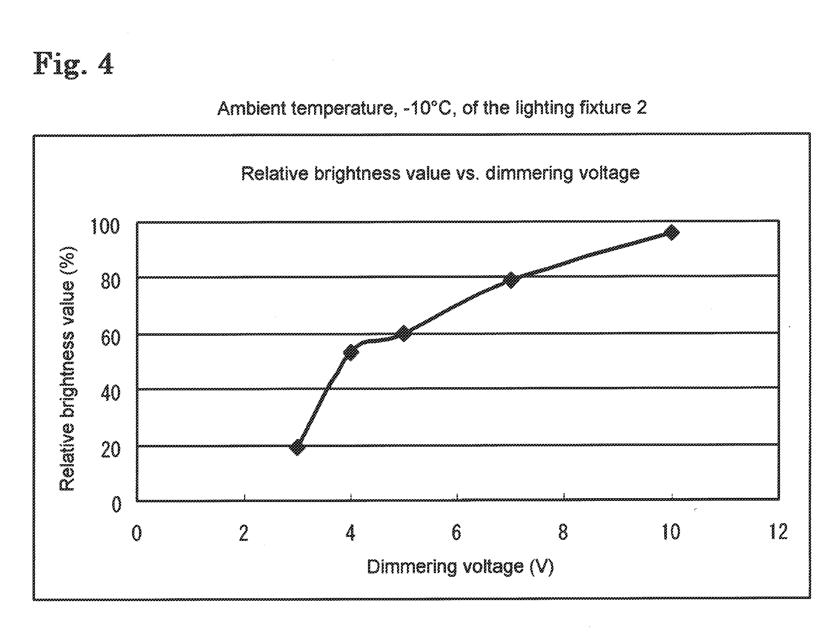

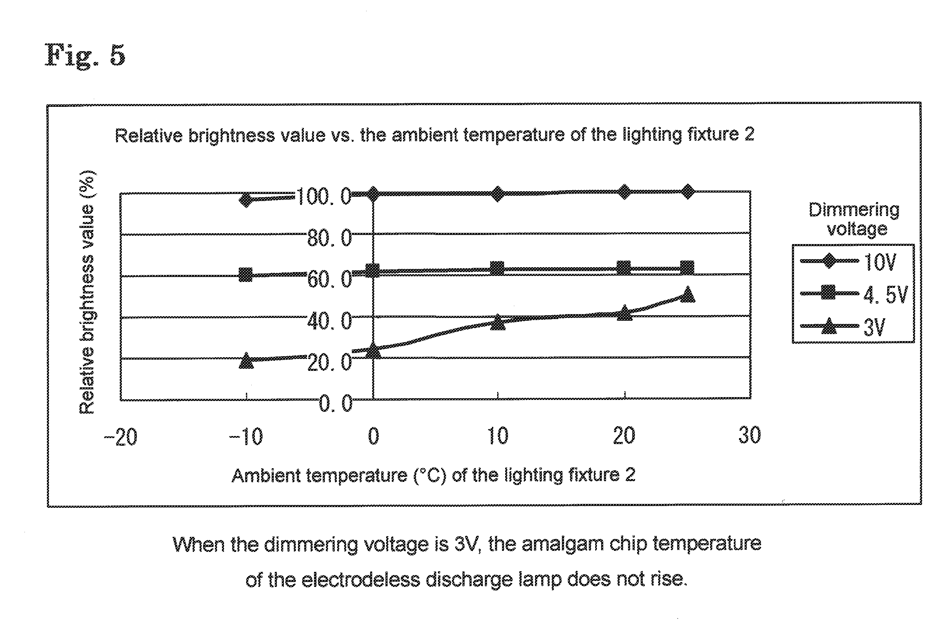

Figs. 1 to 5 show Embodiment 1 of the present invention, of which Fig. 1 shows a lighting fixture for the electrodeless discharge lamp in which the electrodeless discharge lamp, etc. are accommodated, Fig. 2 is a block diagram showing the constitution of the lighting fixture for illuminating the electrodeless discharge, Fig. 3 is a diagram showing the contents of the dimmering control, Fig. 4 is a diagram showing the relationship between the relative brightness value of the electrodeless discharge lamp and the dimmering voltage when the temperature around the apparatus is -10°C, and Fig. 5 is a diagram showing the relationship between the relative brightness value and the temperature around the apparatus when the dimmering voltage of the electrodeless discharge lamp is used as a parameter.

As shown in Fig. 1, a dimmering inverter 3, a controlling relay 5, etc. are accommodated as well as the electrodeless discharge lamp 1 in the lighting fixture 1. The range of output of the electrodeless discharge lamp 1 actually used at present is 100 to 150 W(Watts).

Relating to Fig. 2, the internal constitution of the lighting fixture 2 will be descried in detail. The lighting fixture 2 is connected to the external AC power supply 11 (of, e.g., 200 V, 50/60 Hz), and thus, from the AC power supply 11, power is fed to the dimmering inverter 3 in the lighting fixture 2. The output from this dimmering inverter 3 is fed to the electrodeless discharge lamp 1.

The feature of this embodiment of the present invention lies in that the dimmering signal from outside the lighting fixture 2 is applied to the dimmering inverter 3, whereby dimmering control is performed.

The dimmering signal (for example, 200V, 50/60Hz) is first applied to a control relay 5. As shown in Fig. 3, in case the dimmering signal is ON, the coil 5a is energized, and the contact 5b is shorted, so tat the dimmering signal is applied to the control substrate 4; and the control substrate 4 converts the AC to DC and then applies the DC dimmering signal to the dimmering inverter 3. Thus, upon receipt of the dimmering signal, the dimmering inverter 3 is brought into a 50% operation mode (which means, the output is dropped to 50% as compared with the usual case).

On the other hand, in the dimmering signal is off, the contact 5b becomes open, and thus, the dimmer inverter 3 is brought into a 100%-operation mode.

To the dimmering inverter 3, a control substrate 4 for converting AC to DC is added since the dimmering control is DC control.

As shown in Fig. 4, if the dimmering voltage (the output voltage of the control substrate 4) applied to the dimmering inverter 3 is made higher than 4V when the ambient temperature of he lighting fixture 2 is -10° C, then an approximately 60% of brightness is obtained.

As shown in Fig. 5, when the dimmering voltage is 3V, the amalgam chip temperature of the lighting fixture 2 falls (to -10° C), then the brightness of the electrodeless discharge lamp 1 extremely falls. If the dimmering voltage is 4.5V, then a brightness of about 60% is obtained. Accordingly, from the practical viewpoint, the dimmer voltage need be made higher than 4V.

## Claims

1. lighting fixture for an electrodeless discharge lamp comprises an electrodeless discharge lamp, a dimmering inverter connected to an AC power supply and applies a high-frequency voltage to said electrodeless discharge lamp,a controlling relay which turns on/off upon receipt of anAC dimmering signal, and a control substrate which converts said AC dimmering signalfrom said controlling relay into DC and applies a DC dimmering signal to said dimmering inverter, wherein, in case said controlling relay is ON, said controlsubstrate outputs said DC dimmering signal higher than 4 volts,and said dimmering inverter assumes an operation mode of about 50%.
